Europäisches Patentamt

European Patent Office

Office européen des brevets

(11) Publication number: **0 212 771**
**A1**

# (12) EUROPEAN PATENT APPLICATION

(21) Application number: 86302500.3

(22) Date of filing: 04.04.86

(51) Int. Cl.⁴: **C09K 3/10**

(30) Priority: 21.08.85 US 767886

(43) Date of publication of application:
04.03.87 Bulletin 87/10

(84) Designated Contracting States:
DE FR GB IT

(71) Applicant: PROTECTIVE TREATMENTS INC.
3345 Stop Eight Road
Dayton, OH 45414(US)

(72) Inventor: Schiappacasse, Russell F.
4322 Riverside No. 1-2
Dayton Ohio 45405(US)
Inventor: Gerace, Michael J.
5405 Chimney Circle
Kettering Ohio 45440(US)
Inventor: Morgan, Douglas
12136 Pippin Road
Cincinnati Ohio 45231(US)

(74) Representative: McCallum, William Potter et al
Cruikshank & Fairweather 19 Royal
Exchange Square
Glasgow G1 3AE Scotland(GB)

(54) **Viscosity stable plastisol sealant.**

(57) A viscosity stable plastisol sealant composition and method of application is provided. The sealant includes a polyvinyl chloride resin, a plasticizer for the resin in an amount sufficient to retard the migration of other components of the sealant, and a silane adhesion promoter having a sulfur functionability.

EP 0 212 771 A1

Xerox Copy Centre

## VISCOSITY STABLE PLASTISOL SEALANT

This invention relates to viscosity stable plastisol sealants and methods of application to metal surfaces, and more particularly to a viscosity stable polyvinyl chloride plastisol sealant composition which does not cause curing problems, yellowing, or discoloration of high solids automobile paint systems when applied to metal joints.

The automobile industry uses polyvinyl chloride based plastisol sealers in the manufacture of various automotive products. Principally, these plastisol sealers are used for sealing metal automobile body joints. Such a seal guards against the penetration of deleterious environmental elements such as moisture, dirt, salt, and the like. Typically, these metal joints are ones in which the sheet metal has been coated with a water-based primer. Such a primer is typically electrodeposited on the metal joint and becomes the surface to which the sealant must adhere.

Generally, these polyvinyl chloride based plastisol sealers are flowed, sprayed, or brushed into place. The sealers are then cured by subjecting them to a heat cycle which fuses the sealant into a tough, resilient film.

The sealed and primed metal surface is then painted with a variety of colored top-coat films and again subjected to a heat cycle which cures the paint. In some instances, the paint is applied to the wet, uncured sealant, and both materials are cured simultaneously.

Typically, these polyvinyl chloride based plastisol sealants have included adhesion promoters in their formulations to provide proper bonding to the primed metal surface. A common class of adhesion promoters which have been utilized in the past are acrylic monomers such as trimethylolpropanetrimethacrylate. Although such acrylic monomers have been effective in promoting adhesion, they are not storage stable and do not possess an acceptably stable shelf life. During storage, the vinyl plastisol sealants containing acrylic monomer adhesion promoters tend to increase in viscosity. This increase in viscosity can render the sealant too thick to be readily applied to a primed metal surface. It is believed that this increase in viscosity may be due to a premature reaction of the acrylic monomer in the vinyl plastisol matrix.

Another class of adhesion promoters which has found use in vinyl plastisol based sealants are those adhesion promoters which contain a nitrogen functionality. Typically, these adhesion promoters are either polyamino amides, polyamides, or amine-containing organosilanes. Vinyl plastisol formulations which contain these nitrogen functional adhesion promoters exhibit excellent viscosity stability during storage. Such nitrogen functionality containing adhesion promoters have been used extensively in the past by the automotive industry.

Recently, however, in order to satisfy environmental regulations relating to hydrocarbon emissions, the automotive industry has turned to high solids paint systems which contain much lower concentrations of hydrocarbon solvents. Generally, these high solids paint systems may be either of two classes, namely, the enamels or the two-coat systems known as base coat/clear coat systems. In the latter systems, the base coat carries the color pigments and the clear coat provides surface gloss.

In either instance, the high solids paint systems possess reactive lower molecular weight paint resins which require less solvent to achieve a proper viscosity for application. Because of this change from earlier higher molecular weight/lower functionality resins, the introduction of reactive high solids paints has lead to paint acceptability problems where the paint is in contact with vinyl plastisol sealants.

It has been found that most of the prior art viscosity stable polyvinyl chloride plastisol body sealants, including those with nitrogen functionality containing adhesion promotion systems are incompatible with the new generation of high solids paint systems used in the automotive industry. In some cases, this incompatibility has resulted in improper curing of the paint and/or yellowing or discoloration of paint areas in contact with the vinyl plastisol sealant. It is believed that this incompatibility is caused by components in the prior art vinyl plastisol sealants which interfere with the high solids paint curing mechanism. Discoloration and yellowing have been special problems in white high solids enamel paints and in the clear coat of the two-coat paint systems.

Accordingly, there is a need in the art for a viscosity stable vinyl plastisol sealant composition which will be compatible with the high solids paint systems presently utilized by the automotive industry. Such a vinyl plastisol sealant needs to be storage stable, adhere well to both the overlying paint coating and primed metal surfaces, and not cause any tackiness or improper cure nor any discoloration or yellowing of the paint surface.

An object of the present invention is to provide a viscosity stable plastisol sealant composition which adheres to both high solids paint systems and primed metal surfaces, possesses an excellent shelf life, does not interfere with the curing of such paint systems, and does not cause yellowing or discoloration of such paint systems.

According to one aspect of the present invention, a viscosity stable plastisol sealant is provided which includes a polyvinyl chloride polymer resin, a plasticizer for that resin in an amount sufficient to retard the migration of the other components of said sealant from the sealant, and a silane adhesion promoter having a sulfur functionality.

The present invention also provides a method for sealing a metal joint to prevent the penetration of moisture and contaminants into the joint and to avoid discoloration of paints subsequently applied over the joint which includes the steps of applying a primer to the joint and then applying the viscosity stable vinyl plastisol sealant of the present invention to the primed joint and curing the sealant to a tough resilient film.

The sulfur functional silane adhesion promoters of the present invention have been found to be compatible with high solids paint systems and do not result in paint tack or discoloration or yellowing. Typically, the sulfur functional silanes are mercaptosilanes.

The plasticizer utilized in the present invention retards the migration of other components of the sealant such as the adhesion promoter out of the sealant and into any overlying paint film. The plasticizer may contain both a polymeric component and a monomeric component.

Additionally, the composition of the present invention may also contain small amounts of wetting agents, heat stabilizers, and diluents. Finally, the composition can contain conventional inert pigments and fillers.

Embodiments of the present invention will now be described, by way of example.

With respect to present commercially available vinyl plastisol sealants, it has been determined that compositional factors in such sealants have led to incompatibility problems with high solids paint systems. Such sealants contain ingredients which migrate from the sealant into the paint. This migration has been found to result in a softening of the paint through plasticization of the paint resin and/or inhibition of the curing systems of these paints through chemical interference.

This incompatibility with high solids paint systems is especially a problem for vinyl plastisol sealants which contain nitrogen functional adhesion promoters. While such nitrogen functional adhesion promoters exhibit good viscosity stability in the sealant formulation, they show a pronounced tendency to produce paint softening or tack and discoloration or yellowing. The effect becomes more pronounced upon paint baking and aging. It is believed that the nitrogen functional adhesion promoters interfere with the crosslinking cure mechanisms in the paint resin.

The present invention provides a vinyl plastisol sealant which is functionally compatible with high solids paint systems as well as presently utilized aqueous-based metal primer systems. The sealant of the present invention not only is compatible with high solids paint systems, but also possesses all of the necessary functional properties of a good sealant/adhesive including adhesive strength (both to paint and primed metal substrate), hardness when cured, flow, viscosity, and viscosity stability.

The plastisol sealant of the present invention has three primary components including a polyvinyl chloride polymer resin, a plasticizer for the resin in an amount sufficient to retard the migration of other components of the sealant from the sealant, and a silane adhesion promoter having a sulfur functionality. Additionally, the sealant of the present invention may also include one or more inorganic fillers or pigments, wetting agents, heat stabilizers, and diluents.

Plasticizers useful in the practice of the present invention may be selected from any of a number of higher molecular weights (i.e., having molecular weights above about 1000) polymeric acid esters. Examples of such polymeric plasticizers include esters of succinic, adipic, sebacic, tallic, lauric, azelaic, caprylic, hexanoic, benzoic, phthallic, phosphoric, oleic, glutaric, trimellitic, and stearic acids, including mixtures or blends of these compounds. These polymeric plasticizers have low diffusion rates because of their higher molecular weights and also act to retard the migration of other components of the sealant from the sealant. Preferred polymeric plasticizers include Staflex 812 - (trademark), a polymeric ester of adipic acid available from the Reichhold Chemical Company and plasticizer P-550 (trademark), a polymeric ester of glutaric acid available from the C.P. Hall Company.

The plasticizer for the sealant of the present invention may also include a monomeric component of one or a mixture of plasticizing monomers. Such monomeric plasticizing agents are used in conjunction with the polymeric plasticizers in order to achieve specific desired characteristics in the sealant such as proper gellation, fusion, and flow properties. Examples of such monomeric plasticizers include monomeric esters of succinic, adipic, sebacic, tallic, lauric, azelaic, caprylic, hexanoic, benzoic, phthallic, phosphoric, oleic, glutaric, trimellitic, and stearic acids such as, for example, dibutyl succinate; dibutyl sebacate; dibutoxyethyl adipate, glutarate, sebacate, or azelate; dibenzyl sebacate and azelate; didecyl glurarate; and similar compounds.

Other monomeric plasticizers include N,N-dimethyl caprylamide capramide, N,N-dimethyl oleoamide, oleyl nitrile, N-ethyl toluenesulfonamide, and 2,2,4-trimethyl-1,3-pentanediol benzoate isobutyrate. Additionally, low molecular weight chlorinated paraffinic oils may be used as plasticizers. Preferred monomeric plasticizers include 2,2,4-trimethyl-1,3-pentanediol benzoate isobutyrate, available from the Eastman Kodak Company under the designation Nuoplaz 1046 (trademark); butyl benzyl phthalate, available from Monsanto Corp.; and a chlorinated paraffinic oil, available from the Diamond-Shamrock Corp. under the designation Chlorowax 100 (trademark).

With respect to adhesion promoters which are useful in the practice of the present invention, the class of organosilanes containing a sulfur functionality is preferred. These silane adhesion promoters are commercially available from a number of sources. Examples of such silanes include 3-mercapto propyl triethoxy silane, 3-mercapto propyl methyl dimethoxy silane, mercaptoethyltriethoxysilane, and γ-mercapto propyl trimethoxy silane. The latter is available from Union Carbide Corp. under the designation Silane A-189 (trademark).

The polyvinyl chloride polymer resin component of the sealant may be any of a number of such resins which have heretofore been used in vinyl-based plastisol sealants. Examples include a mixture of a PVC-based dispersion resin of a copolymer of 5% vinyl acetate with vinyl chloride - (Vestolit 7091 (trademark) from Huls Co.) with a PVC-based blending resin of a copolymer of 4% vinyl acetate with vinyl chloride (BR 521 from Tenneco Inc.).

It is preferred that the sealant of the present invention contain from about 5 to 75% by weight of the polyvinyl chloride resin components, from about 1 to 30% by weight of a plasticizer component, from about 10-60% by weight of inorganic fillers and pigments, and from about 0.1-8.0% by weight of a silane adhesion promoter having a sulfur functionality. Additionally, the sealant composition may contain other ingredients such as wetting agents, heat stabilizers, and diluents.

Examples of suitable fillers and/or pigments include calcium oxide (lime), titanium dioxide, and ground or precipitated calcium carbonate. Pulverized quicklime, having particles sized to pass through a 325 U.S. mesh screen, is an example of a suitable filler. It is available from Mississippi Lime Company under the designation Vertical Kiln Quicklime. Suitable calcium carbonates include wet ground CaCO₃ having a particle size of 2.5-25 microns, available from Thompson-Weineman Co. under the designation Duramite (trademark), and precipitated CaCO₃ having an average particle size of 0.08 microns from Shiraishi Chemical Co., under the designation Hakuenka CC (trademark). Rutile titanium dioxide may be obtained, for example, from E.I. duPont de Nemours Co. under the designation Ti-Pure R-900 (trademark).

Small amounts of a wetting agent, from 0.05 - 5.0%, and preferably less than 1.0% by weight may also be added to the composition. One suitable class of wetting agents are non-ionic surface active agents such as glycol esters of fatty acids. One example of this class of wetting agent is Interwet 33 from Interstab Co. From 0.1-7.5%, and preferably from 0.4-0.6% by weight, of a heat stabilizer such as CZ19A (trademark), a mixture of calcium and zinc soaps of alkyl carboxylic acids available from Interstab Co. may also be added. Finally, a diluent such as mineral spirts may also be added to the composition in an amount of from 1-30%, and preferably 2-5% by weight. In order that the invention may be more readily understood, reference is made to the following example, which is intended to illustrate the invention, but is not to be taken as limiting the scope thereof.

Example

A viscosity stable plastisol sealant in accordance with the present invention was prepared as follows. All percentages are by weight unless otherwise indicated.

A water-jacketed vertical mixer, with vacuum capability, of the type made by Cleveland Mixer Company, Division of Greerco Corporation, having a working capacity of 2273 liters (500 gallons) was used to prepare and mix the plastisol sealant. The water cooling jacket was turned on and allowed to stabilize between 13-14°C (55-58°F). The mixer was then charged with 431 Kg (950 lbs.) polymeric plasticizer, 50 Kg (110 lbs.) chlorinated paraffin and 5.9 Kg (13 lbs.) of wetting agent and mixed for three minutes. Then, 13.6 Kg (30 lbs.) of heat stabilizer, 59 Kg (130 lbs.) of calcium oxide, 29.5 Kg (65 lbs.) of titanium dioxide, 681 Kg (1500 lbs.) of dispersion PVC resin and 125 Kg (275 lbs.) of blending PVC resin were charged while the mixer was running and allowed to mix for five minutes. Nine hundred and eight kilograms (2000 lbs.) of calcium carbonate filler were then added and mixed for 10 minutes, after which 250 Kg (550 lbs.) of precipitated calcium carbonate was added. Mixing was continued for 20 minutes in order to wet out these fillers. This represents the highest viscosity point of the mix, after which the sealant is diluted slowly to proper viscosity at a rate which will not produce a lumpy compound. Fifty-nine kilograms (130 lbs.) of monomeric plasticizer was then charged and allowed to mix 5 minutes. The adhesion promoting silane and the diluent were then added, mixed for 10 minutes, and the sealant mixture was then adjusted for proper viscosity. The mixer was then sealed and mixed for 30 minutes under a vacuum of at least 690 gm/cm² (20 inches). The sealant was then pumped into drums through a 40 U.S. mesh screen to remove any remaining lumps, and the drums were then sealed.

The plastisol sealant prepared above has the following final composition:

| Ingredient | Weight % |
|---|---|
| Polymeric Plasticizer (Staflex 812) | 14 |
| Chlorinated Paraffin (Chlorowax 100) | 4 |
| Wetting Agent (Interwet 33) | 0.2 |
| Heat Stabilizer (Interstab CZ19A) | 0.5 |
| Calcium Oxide (Mississippi Lime) | 2.0 |
| Titanium Dioxide (DuPont R-900) | 1.0 |
| Copolymer PVC Dispersion Resin (Vestolit 7091) | 23 |
| Copolymer PVC Blending Resin (Tenneco BR 521) | 4 |
| Ground Calcium Carbonate (Duramite) | 30 |
| Precipitated Calcium Carbonate (Hakuenka CC) | 8 |
| Monomeric Plasticizer (Nuoplaz 1046) | 2 |
| Monomeric Ester Plasticizer (Santicizer 160) | 7 |
| Mercapto Silane (Union Carbide A-189) | 0.8 |
| Diluent (Mineral Spirits) | 3.5 |

Having described the invention in detail and by reference to preferred embodiments thereof, it will be apparent that modifications and variations are possible without departing from the scope of the invention as defined in the appended claims.

## Claims

1. A viscosity stable plastisol sealant characterized by a polyvinyl chloride resin, a plasticizer for said resin in an amount sufficient to retard the migration of other components of said sealant from said sealant, and a silane adhesion promoter having a sulfur functionality.

2. A sealant as claimed in claim 1 in which said silane is a mercaptosilane.

3. A sealant as claimed in claim 1 or 2, in which said silane is present in an amount of from 0.1 to 8.0% by weight.

4. A sealant as claimed in claim 2 in which said silane is γ-mercapto propyl trimethoxy silane.

5. A sealant as claimed in any preceding claim, in which said plasticizer is selected from a polymeric ester of succinic, adipic, sebacic, tallic, lauric, azelaic, caprylic, hexanoic, benzoic, phthallic, phosphoric, oleic, glutaric, trimellitic, or stearic acid, or a mixture thereof.

6. A sealant as claimed in claim 5 in which said plasticizer is present in an amount of from 1 to 30% by weight.

7. A sealant as claimed in claim 5 or 6, in which said plasticizer is a polymeric ester of adipic acid having a molecular weight of about 1100.

8. A sealant as claimed in claim 5 in which said plasticizer further includes a monomeric plasticizing component selected from a monomeric ester of succinic, adipic, sebacic, tallic, lauric, azelaic, caprylic, hexanoic, benzoic, phthallic, phosphoric, oleic, glutaric, trimellitic, or stearic acid, N,N-dimethyl caprylamide capramide, N,N-dimethyl oleoamide, oleyl nitrile, N-ethyl toluenesulfonamide, or 2,2,4-trimethyl-1,3-pentanediol benzoate isobutyrate, or a mixture thereof.

9. A sealant as claimed in claim 8 in which said monomeric plasticizing component is present in an amount of from 1 to 25% by weight.

10. A viscosity stable plastisol sealant as claimed in claim 1 characterized by from 5 to 75% by weight of a polyvinyl chloride resin, from 1 to 30% by weight of a plasticizer for said sealant, from 10 to 60% by weight of inorganic fillers or pigments, and from 0.1 to 8.0% by weight of a silane adhesion promoter having a sulfur functionality.

11. A sealant as claimed in claim 10 in which said plasticizer includes a polymeric component and a monomeric component.

12. A sealant as claimed in claim 11 in which said polymeric component of said plasticizer is a polymeric ester of adipic acid and said monomeric component of said plasticizer is 2,2,4-trimethyl-1,3-pentanediol benzoate isobutyrate.

13. A method for sealing a metal joint to prevent the penetration of moisture and contaminants into the joint and to avoid discoloration of paints subsequently applied over the joint comprising applying a primer to the joint, and then applying to the primed joint a viscosity stable vinyl plastisol sealant as claimed in any preceding claim, and curing the sealant to a tough resilient film.

## DOCUMENTS CONSIDERED TO BE RELEVANT

EP 86302500.3

| Category | Citation of document with indication. where appropriate, of relevant passages | Relevant to claim | CLASSIFICATION OF THE APPLICATION (Int. Cl.4) |
|---|---|---|---|
| A | DE - B2 - 2 148 457 (WACKER)<br><br> * Claim; column 3, lines 8-27; column 2, lines 18-21 *<br><br>-- | 1 | C 09 K 3/10 |
| A | AT - B - 271 680 (GLASURIT)<br><br> * Claim 1; page 2, lines 27-30 *<br><br>-- | 1,5,8 | |
| A | DR. OTTO-ALBRECHT NEUMÜLLER "Römpps Chemie Lexikon", 7th edition, 1977 FRANCKH'SCHE VERLAGSBUCHHANDLUNG, Stuttgart<br><br> * Pages 3893-3896 *<br><br>---- | 5,8 | |

TECHNICAL FIELDS SEARCHED (Int. Cl.4)

C 09 K

C 08 L

C 08 K

The present search report has been drawn up for all claims

| Place of search | Date of completion of the search | Examiner |
|---|---|---|
| VIENNA | 17-09-1986 | WILFLINGER |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82